Europäisches Patentamt

**European Patent Office**

Office européen des brevets

(11) Numéro de publication: **0 289 387 B1**

(12) **FASCICULE DE BREVET EUROPEEN**

(45) Date de publication de fascicule du brevet: **07.10.92** (51) Int. Cl.5: **H02J 9/06, H04M 19/08**

(21) Numéro de dépôt: **88400920.0**

(22) Date de dépôt: **15.04.88**

(54) **Alimentation en énergie électrique continue secourue avec une signalisation de l'état de secours par inversion de polarité.**

(30) Priorité: **29.04.87 FR 8706078**

(43) Date de publication de la demande:
**02.11.88 Bulletin 88/44**

(45) Mention de la délivrance du brevet:
**07.10.92 Bulletin 92/41**

(84) Etats contractants désignés:
**AT BE CH DE ES FR GB IT LI NL SE**

(56) Documents cités:
**EP-A- 0 162 563**
**FR-A- 2 585 526**

**CONFERENCE PROCEEDINGS, INTELEC '85, Seventh International Telecommunication Energy Conference, 14-17 octobre 1985, conf. 7, pages 513-519, IEEE, New York, US; W. KRAUTKRÄMER et al.: "Remote power feeding of ISDN-terminals at the basic access"**

**PATENT ABSTRACTS OF JAPAN, vol. 9, no. 85 (E-308)[1808], 13 avril 1985, Seite 31 E 308; & JP-A-59 215 170**

(73) Titulaire: **ALCATEL CIT**
**12 Rue de la Baume**
**F-75008 Paris(FR)**

(84) Etats contractants désignés:
**BE DE FR GB IT NL SE**

(73) Titulaire: **ALCATEL N.V.**
**Strawinskylaan 537 (World Trade Center)**
**NL-1077 XX Amsterdam(NL)**

(84) Etats contractants désignés:
**CH ES LI AT**

(72) Inventeur: **Marcel, François**
**86bis avenue Saint-Laurent**
**F-91400 Orsay(FR)**

(74) Mandataire: **Weinmiller, Jürgen, Dipl.-Ing. et al**
**Spott, Weinmiller & Partner Lennéstrasse 9**
**Postfach 24**
**W-8133 Feldafing(DE)**

Rank Xerox (UK) Business Services

## Description

La présente invention concerne les alimentations en énergie électrique continue comportant une source principale d'alimentation qui délivre l'énergie électrique continue dans les conditions normales de fonctionnement et une source auxiliaire d'alimentation, de moindre puissance que la source principale, qui remplace cette dernière en cas de défaillance tout en inversant la polarité d'alimentation pour signaler l'état de secours et permettre de réduire la charge au minimum indispensable en connectant certains de ses éléments, à ne pas alimenter en cas de défaillance de la source, par l'intermédiaire d'une diode bloquée lors d'une inversion de polarité et ses éléments restants, à alimenter dans tous les cas, au moyen d'un pont de diodes se jouant des inversions de polarité.

Ce genre d'alimentation en énergie électrique continue est décrit par exemple dans le document CONFERENCE PROCEEDINGS, INTELEC'85, Seventh International Telecommunication Energy Conference, 14-17 octobre 1985, conf. 7, pages 513-519, IEEE, New York, US; W. KRAUTKRAMER et al. : "Remote power feeding of ISDN-terminals at the basic access", et s'utilise notamment en Télécommunication, dans les Réseaux Numériques à Integration de Services où les terminaux numériques donnant aux usagers un accès à un grand nombre de services de télécommunication ont une consommation trop importante pour pouvoir être téléalimentés à partir du central local de commutation comme les terminaux téléphoniques classiques et où il faut néanmoins assurer un service téléphonique minimum en cas de défaillance du secteur assurant localement l'alimentation d'un terminal numérique.

La présente invention a pour but une alimentation en énergie électrique continue secourue, du type précité, dont les deux sources puissent fonctionner naturellement, même lorsqu'elles sont séparées géographiquement, sans nécessiter une liaison de signalisation spéciale entre les deux, cela afin de pouvoir l'intégrer à un accès au réseau numérique sans qu'il soit nécessaire de prévoir un câblage spécial d'une liaison de signalisation entre les deux sources.

Elle a pour objet une alimentation en énergie continue secourue, avec une signalisation de l'état de secours par une inversion de polarité, comportant une source principale d'alimentation qui délivre l'énergie électrique continue dans les conditions normales de fonctionnement et une source auxiliaire d'alimentation, de moindre puissance que la source principale, qui remplace cette dernière en cas de défaillance tout en inversant la polarité d'alimentation pour signaler l'état de secours et permettre de réduire la charge au minimum indispensable en connectant certains de ses éléments, à ne pas alimenter en cas de défaillance de la source, par l'intermédiaire d'une diode bloquée lors d'une inversion de polarité et ses éléments restants, à alimenter dans tous les cas, au moyen d'un pont de diodes se jouant des inversions de polarité, essentiellement caractérisée en ce qu'elle comporte une source principale d'alimentation en énergie électrique continue pourvue en sortie d'un dispositif de protection faisant passer sa sortie à l'état de haute impédance en cas d'absence de tension à ses bornes, et une source auxiliaire d'alimentation en énergie électrique continue montée en parallèle et en opposition sur la source principale et pourvue d'un dispositif de limitation de courant déclenché en temps normal par le courant supplémentaire que tente de lui imposer la source principale, le courant de la source principale étant nettement supérieur à celui de la source auxiliaire déterminé par le dispositif de limitation de courant.

En fonctionnement normal, la source principale impose sa polarité et son courant à la charge, la source auxiliaire ne dérivant qu'une très faible partie du courant de la source principale par suite du déclenchement de son dispositif limitation de courant.

En fonctionnement d'urgence ou de secours, lorsque la source principale est défaillante, la source auxiliaire impose sa polarité opposée à la charge, la source principale ne dérivant qu'une très faible partie du courant de la source auxiliaire par suite du déclenchement de son dispositif de protection entraînant le passage de sa sortie à un état de haute impédance.

Dans un mode préféré de réalisation, le dispositif de protection de la source principale joue également le rôle d'un dispositif de limitation de courant tandis que inversement le dispositif de limitation de courant de la source auxiliaire joue aussi le rôle d'un dispositif de protection, les dispositifs associés aux deux sources ayant la même structure mais des valeurs de limitation de courant différentes.

Les sources principale et auxiliaire sont avantageusement protégées contre l'inversion du sens de leur courant chacune par une diode antiretour intercalée en série avec ses bornes.

D'autres caractéristiques et avantages de l'invention ressortiront ci-après de la description d'un mode de réalisation donné à titre d'exemple. Cette description sera faite en regard du dessin dans lequel :

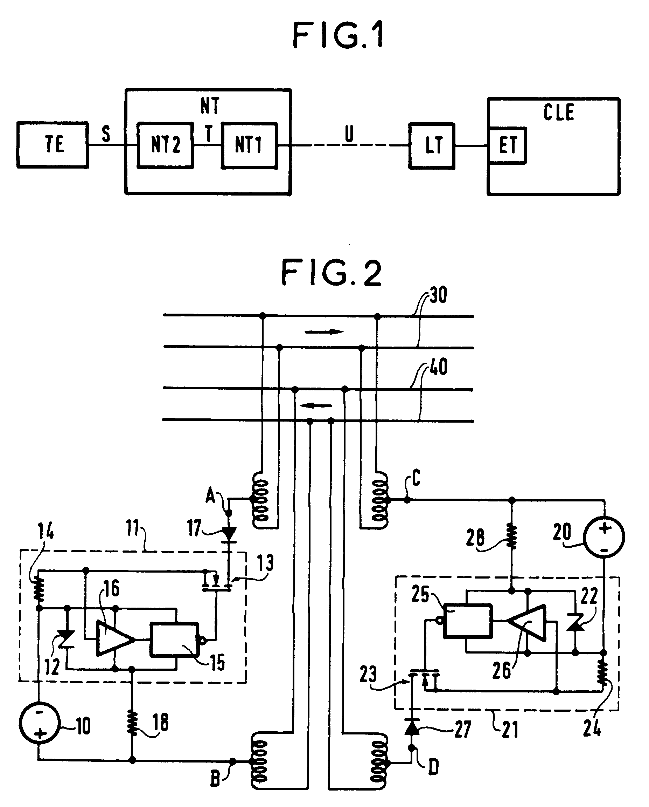

- une figure 1 illustre schématiquement un accès au Réseau téléphonique Numérique à Intégration de Services,
- une figure 2 représente le schéma d'une alimentation électrique secourue, selon l'invention, connectée au circuit fantôme de deux liaisons bifilaires obligatoires de l'interface S ou T d'un accès au Réseau téléphonique Numérique à Intégration de Services et

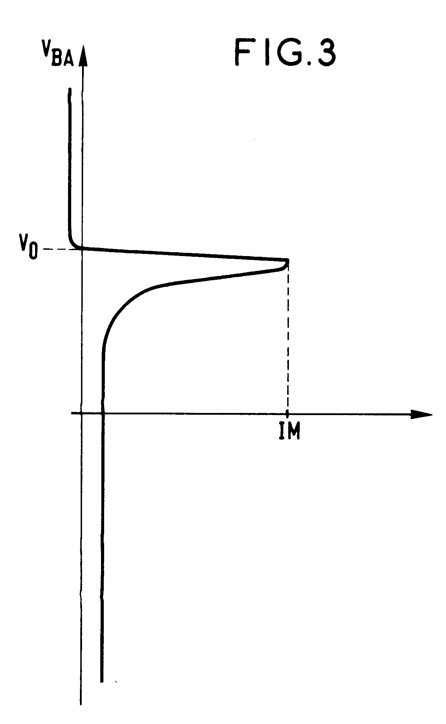

- une figure 3 représente la caractéristique tension-courant de l'alimentation illustrée à la figure 2, en cas de fonctionnement normal.

Un accès de base To d'un usager au Réseau téléphonique Numérique à Intégration de Services est constitué, conformément aux recommandations de la série I du CCITT de deux liaisons bifilaires dites interface S ou T, une par sens de transmission, acheminant chacune deux canaux numériques B à 64 kbit/s et un canal D pour signalisation, données à faible débit ou télémesure à 16 k bit/s.

Ces deux liaisons bifilaires, matérialisées chez l'usager où elles sont exploitées au moyen d'un terminal numérique, constituent l'extrémité d'une chaîne d'éléments dont fait partie la ligne téléphonique dite interface U reliant l'usager au central local de commutation le desservant. Cette chaîne d'éléments, qu'il est haibituel de représenter par une succession de regroupements fonctionnels, est illustrée à la figure 1. Elle commence, côté central local de commutation CLE, par un terminal de réseau de commutation ET regroupant les fonctions de terminaison de réseau de commutation et par un terminal de ligne LT regroupant les fonctions de terminaison de ligne numérique. Elle se poursuit, à l'autre extrémité de la ligne téléphonique, côté usager, par un terminal distant NT qui est constitué au minimum par regroupement fonctionnel de terminaison de ligne numérique NT1 et éventuellement par un regroupement fonctionnel de terminaison de réseau NT2 correspondant à une régie d'abonnés, et qui est relié au terminal numérique TE d'usager par ladite interface S ou T.

Le terminal distant NT a sa partie NT1 téléalimentée à partir du terminal de ligne LT par l'intermédiaire de la ligne téléphonique. Selon la recommandation I 430 du CCITT, il doit lui-même téléalimenter le terminal numérique d'usager TE par l'intermédiaire du circuit fantôme des deux liaisons bifilaires obligatoires de l'interface S ou T, cela à l'aide d'une source quelconque, par exemple le secteur, pouvant fournir environ 4W en régime normal et un minimum de 420 m W dans les conditions d'urgence (absence de secteur) signalées par une inversion de polarité permettant de limiter la téléalimentation du terminal numérique TE aux seules fonctions d'urgence, par exemple à un téléphone de secours.

L'alimentation en énergie électrique du terminal numérique d'usager TE par le terminal distant NT met habituellement en oeuvre, au terminal distant NT, une source principale d'alimentation tirant son énergie du secteur et une source auxiliaire d'alimentation tirant son énergie de la téléalimentation de la partie NT1 assurée au travers de la ligne téléphonique (interface U) par le terminal de ligne LT. Ces deux sources principale et auxiliaire d'alimentation sont habituellement interconnectées au circuit fantôme des deux liaisons bifilaires obligatoires de l'interface S ou T par l'intermédiaire de deux circuits interrupteurs commandables pilotés en opposition par un circuit de détection de la présence du secteur au niveau de la source principale.

Cette solution classique à l'inconvénient d'obliger à disposer la source principale à proximité immédiate de la partie NT1 du terminal distant NT si l'on ne veut pas câbler une liaison de signalisation particulière reliant le circuit de détection de présence du secteur situé à l'emplacement de la source d'alimentation principale, au circuit interrupteur commandable contrôlant la mise en circuit de la source d'alimentation auxiliaire située à l'emplacement de la partie NT1.

Le circuit d'alimentation en énergie électrique continue de la figure 2 supprime cet inconvénient. Il comporte deux sources d'alimentation en courant continu à potentiel flottant, l'une principale 10, l'autre auxiliaire 20, qui peuvent être séparées géographiquement car elles n'ont en commun que leur circuit de charge. Elles sont pourvues de dispositifs de protection et de limitation de courant 11 et 21, de même structure, chacun connecté, en série avec la source qu'il protège à la borne négative de celle-ci et sont connectées ensemble en contention c'est-à-dire en parallèle et en opposition, par l'intermédiaire du circuit fantôme des deux liaisons bifilaires 30, 40 de l'interface S ou T.

Deux diodes antiretour 17, 27 sont en outre intercalées en série avec les dispositifs de protection et de limitation de courant 11 et 21 pour protéger les sources 10, 20 d'une éventuelle inversion du sens du courant imposée par la charge.

Le dispositif de protection et de limitation de courant 11, 21 connecté à la borne négative de la source 10, 20, en série avec celle-ci, est alimenté par la tension délivrée par la source protégée au moyen d'une diode Zener 12, 22 connectée en série avec une résistance 18, 28 aux bornes de cette source. Il comporte un ballast 13, 23 à impédance réglable, et une résistance de mesure de courant 14, 24 placés en série et dans cet ordre, sur le trajet de retour du courant d'alimentation délivré par la source protégée 10, 20. Le circuit ballast 13, 23 est, dans l'exemple de réalisation décrit, un transistor MOS de type N commandé en interrupteur par un circuit monostable 15, 25 lui-même déclenché par un comparateur à seuil 16, 26 sensible à la tension se développant aux bornes de la résistance de mesure de courant 14, 24.

En présence de tension en sortie de la source protégée 10, 20, le circuit monostable 15, 25 délivre au repos, à la grille du transistor MOS servant de ballast 13, 23, une tension suffisante pour le saturer. En dehors de ce seul cas, soit qu'il soit au repos mais non alimenté par suite d'une défaillance de la source protégée 10, 20, soit qu'il ait été déclenché par suite du franchissement du seuil du comparateur 16, 26 par la tension développée au bornes de la résistance de mesure de courant 14, 24, il bloque le transistor MOS servant de ballast 13, 23 en ramenant le potentiel de sa grille au voisinage de celui de sa source.

Le dispositif de protection et limitation de courant 11, 21 a ainsi trois régimes de fonctionnement possibles :

- un régime normal où il n'intervient pas, la source protégée 10, 20 délivrant un courant inférieur à la valeur limite provoquant le franchissement du seuil du comparateur 16, 26 et le déclenchement du monostable 15, 25,
- un régime de charge excessive provoqué par une charge qui imposerait à la source protégée 10, 20 un courant dépassant la valeur limite pour laquelle le seuil du comparateur 16, 26 est franchi. Au départ de ce régime, le comparateur 16, 26 déclenche le circuit monostable 15, 25 qui bloque le transistor ballast 13, 23 sur une durée T1 isolant la source protégée de la charge. Au bout de cette durée T1, le monostable 15, 25 revient au repos et sature à nouveau le transistor ballast 13, 23 qui reconnecte la source protégée à la charge entraînant éventuellement un nouveau déclenchement du circuit monostable 15, 25 si la cause de la surintensité n'a pas disparu. Le courant moyen fourni par la source protégée dans ce régime de charge excessive est réduit dans le rapport de la durée d'excitation T1 du monostable 15, 25 à la durée minimale de son temps de repos t1; ce rapport est choisi suffisamment important pour aboutir à un courant moyen faible eu égard aux capacités de la source protégée 10, 20.
- un régime de défaut où la source protégée 10, 20 ne fournit plus de tension par suite par exemple d'une panne de secteur et où le transistor ballast 13, 23 reste bloqué imposant un passage à haute impédance de la sortie de la source protégée 10, 20 afin qu'elle ne court-circuite pas la charge.

Les seuils des comparateurs 16 et 26 des dispositifs de protection et de limitation de courant 11, 21 sont choisis de manière à donner à la source principale 10 une intensité $I_M$ de courant limite nettement supérieure, par exemple dans un rapport 10, à celle $I_m$ du courant limite de la source auxiliaire 20. Ainsi, lorsque les deux sources principale 10 et auxiliaire 20, qui sont flottantes, sont effectivement présentes et mises en contention par l'intermédiaire du circuit fantôme des liaisons bifilaires 30, 40, elles provoquent l'une pour l'autre un processus de surcharge croissante de courant interrompu par le dispositif de protection et de limitation de courant 21 qui se déclenche le premier, mettant en retrait la source auxiliaire 20 et permettant à la source principale 10 d'imposer sa polarité à la charge.

En cas de défaillance de la source principale 10 par exemple à la suite d'une disparition de la tension du secteur où elle puise son énergie, son dispositif de protection et de limitation de courant 11 n'est plus alimenté ce qui bloque le transistor 13 tandis que le dispositif de protection et de limitation de courant 21 de la source auxiliaire 20 se relâche provoquant la substitution de la source auxiliaire 20 aux bornes de la charge avec une inversion simultanée de la polarité.

Lors du rétablissement de la source principale 10, les deux sources se retrouvent en contention avec un nouveau processus de surcharge mutuelle de courant qui est interrompu par le déclenchement du circuit de protection et de limitation de courant 21 mettant en retrait la source auxiliaire 20.

En cas de défaillance des deux sources principale et auxiliaire 10, 20 les dispositifs de protection et de limitation de courant 11 et 21 des deux sources ne sont plus alimentés provoquant le passage des sorties des deux sources 10, 20 à un état de haute impédance.

La figure 3 représente la caractéristique tension-courant de l'alimentation qui vient d'être décrite dans le cas d'un fonctionnement normal c'est-à-dire dans le cas où la source principale 10 fonctionne, la tension développée entre ses bornes correspondant alors à la différence de potentiel existant entre la liaison bifilaire 40 et la liaison bifilaire 30 ou ce qui revient au même entre les points B et A ou D et C de la figure 2.

Cette caractéristique comporte quatre zones distinctes de fonctionnement :

- une première zone de fonctionnement où l'on retrouve aux bornes de la charge une tension supérieure à la tension à vide Vo de la source principale. Elle correspond à un régime de surtension positive forcée dans lequel la charge se présente comme une source de tension de même signe et d'amplitude supérieure à la source principale 10. La charge tente d'imposer à la source principale 10 un courant inverse qui est bloqué par la diode antiretour 17 et impose à la source auxiliaire 20 une intensité de courant qui déclenche ou maintient déclenché son dispositif de protection et de limitation de courant 21,
- une deuxième zone de fonctionnement dans le voisinage inférieure immédiat de la tension à vide Vo de la source principale qui correspond au régime normal actif de l'alimentation, le courant qu'elle délivre allant, en fonction des besoins de la charge, de O à la valeur limite $I_M$ de déclenchement de son dispositif de protection de limitation de courant 11,

- une troisième zone de fonctionnement allant jusqu'au potentiel zéro et correspondant pour la source principale 10 à un régime transitoire provoqué par une charge lui imposant un courant d'intensité supérieure à la valeur limite $I_M$ provoquant le déclenchement de son dispositif de protection et de limitation de courant. Ce régime transitoire conduit à un courant moyen faible et cesse dès que la cause de la surcharge disparaît,

- une quatrième zone de fonctionnement où l'on retrouve aux bornes de la charge une tension opposée à celle de la source principale alors que cette dernière est présente. Elle correspond à un régime de surtension négative forcée dans lequel la charge impose à la source principale 10 une surintensité en courant déclenchant son dispositif de protection et de limitation de courant 11 tandis que le courant inverse qu'elle tente d'imposer à la source auxiliaire 20 est bloqué par la diode antiretour 27. Il s'agit, en quelque sorte, d'un super court-circuit puisque la tension n'est pas nulle mais forcée au-delà de zéro à des valeurs opposées à celle de la source principale. Ce régime peut être provoqué en connectant comme charge une source d'alimentation en courant continu en opposition de polarité avec la source principale 10 et avec une capacité en courant supérieure à celle de cette dernière. C'est un état stable, sans problème de dissipation thermique pour l'alimentation puisque le dispositif de protection et limitation de courant 11 limite son courant à une valeur extrémement faible.

En cas d'absence de la source principale 10, la source auxiliaire 20 prend le relais et donne à l'alimentation une caractéristique tension-courant de forme analogue à celle qui vient d'être décrite, qui se déduit de cette dernière en inversant le signe des tensions et en remplaçant la valeur limite de courant $I_M$ par celle plus faible $I_m$ de la source auxiliaire 20 et, le cas échéant, la tension à vide Vo par celle de la source auxiliaire 20 si cette tension est différente de Vo.

Il est possible, dans le cadre des dispositifs de protection et de limitation de courant, d'obtenir la limitation du courant non pas par une commande en tout ou rien d'un transistor ballast mais par une commande en continu, le comparateur agissant sur le transistor ballast pour que la tension développée aux bornes de la résistance de mesure de courant plafonne à une valeur limite correspondant à la valeur limite de courant choisie.

## Revendications

1. Alimentation en énergie électrique continue secourue avec une signalisation de l'état de secours par inversion de polarité, comportant une source principale d'alimentation qui délivre l'énergie électrique continue dans les conditions normales de fonctionnement et une source auxiliaire d'alimentation, de moindre puissance que la source principale, qui remplace cette dernière en cas de défaillance tout en inversant la polarité d'alimentation pour signaler l'état de secours et permettre de réduire la charge au minimum indispensable en connectant certains de ses éléments, à ne pas alimenter en cas de défaillance de la source, par l'intermédiaire d'une diode bloquée lors d'une inversion de polarité et ses éléments restants, à alimenter dans tous les cas, au moyen d'un pont de diodes se jouant des inversions de polarité, caractérisée en ce qu'elle comporte une source principale (10) d'alimentation en énergie électrique continue pourvue d'un dispositif de protection (11) faisant passer sa sortie à l'état de haute impédance en cas d'absence de tension à ses bornes, et une source auxiliaire (20) d'alimentation en énergie électrique continue montée en parallèle et en opposition sur la source principale (10) et pourvue d'un dispositif de limitation de courant (21) déclenché en temps normal par le courant supplémentaire que tente de lui imposer la source principale (10), le courant de la source principale étant nettement supérieur à celui de la source auxiliaire déterminé par le dispositif de limitation de courant.

2. Alimentation selon la revendication 1, caractérisée en ce que le dispositif de protection (11) de la source principale (10) est également pourvu de moyens de limitation de courant (14, 15, 16).

3. Alimentation selon la revendication 1, caractérisée en ce que le dispositif de limitation de courant (21) de la source auxiliaire (20) est pourvu de moyens (25) faisant passer la sortie de ladite source auxiliaire (20) à l'état de haute impédance en cas d'absence de tension à ses bornes.

4. Alimentation selon la revendication 1, caractérisée en ce que les sources principale (10) et auxiliaire (20) sont pourvues chacune d'une diode antiretour (17, 27) interdisant une inversion du sens de leur courant.

**5.** Alimentation selon la revendication 1, caractérisée en ce que le dispositif de protection (11) de la source principale (10) placé en série avec cette dernière est alimenté par la tension développée entre les deux bornes de cette dernière (10) et passe à l'état de haute impédance en cas de non alimentation.

**6.** Alimentation selon la revendication 5, caractérisée en ce que le dispositif de protection (11) de la source principale (10) est alimenté par la tension développée par ladite source principale (10) par l'intermédiaire d'une diode Zener (12) connectée en série avec une résistance aux bornes de cette source principale (10).

**7.** Alimentation selon la revendication 1, caractérisée en ce que le dispositif de limitation de courant (21) de la source auxiliaire (20) comporte un circuit ballast (23) à impédance variable et une résistance de mesure de courant (24) placés en série sur le trajet du courant de la source auxiliaire (20) ainsi que des moyens de commande (25, 26) du circuit ballast (23) en fonction de la tension développée aux bornes de la résistance de mesure de courant (24).

**8.** Alimentation selon la revendication 7, caractérisée en ce que ledit circuit ballast (23) est un transistor commandé en tout ou rien et en ce que lesdits moyens de commande du circuit ballast (23) comportent un circuit monostable (25) déclenché par un comparateur à seuil (26) sensible à la tension développée aux bornes de la résistance de mesure de courant (24).

**9.** Alimentation selon la revendication 1, caractérisée en ce que le dispositif de limitation de courant (21) de la source auxiliaire (20) est alimenté par la tension développée aux bornes de cette dernière (20) et passe à l'état de haute impédance en cas de non alimentation.

**Claims**

**1.** An emergency D.C. power supply adapted to signal the emergency status by polarity reversal, comprising a main power source which delivers D.C. power under normal operating conditions and an auxiliary power source of smaller power than the main source which replaces the main source in the event of a failure while reversing the power supply polarity in order to indicate the presence of the emergency state and in order to reduce the load to an unavoidable minimum by having some components which are not to be powered in the event of a power supply failure connected via a diode which is reversely biased when polarity reversal takes place, while having the remaining components which are to be powered under all circumstances connected via a diode bridge which is insensitive to polarity reversals, characterized in that it comprises a main power source (10) for providing D.C. power, fitted with a protection device (11), causing its output to go to a high impedance state in the absence of voltage across its terminals, and an auxiliary power source (20) for providing D.C. power connected in parallel and in opposition with the main source (10) and fitted with a current limiting device (20) which is normally triggered by the additional current which the main source (10) attempts to impose thereon, said main source current being superior to the auxiliary source current, which is determined by the current limiting device.

**2.** A power supply according to claim 1, characterized in that the protection device (11) of the main source (10) is also provided with current limiting means (14, 15, 16).

**3.** A power supply according to claim 1, characterized in that the current limiting device (21) of the auxiliary source (20) is provided with means (25) causing the outlet from said auxiliary source (20) to pass to a high impedance state in the absence of a voltage at its terminals.

**4.** A power supply according to claim 1, characterized in that the main source (10) and the auxiliary source (20) are each provided with a respective non-return diode (17, 27) preventing current from flowing through them in the reverse direction.

**5.** A power supply according to claim 1, characterized in that the protection device (11) of the main source (10) is connected in series therewith and is powered by a voltage developed between the two terminals of the main source (10) and passes to the high impedance state when unpowered.

**6.** A power supply according to claim 5, characterized in that the protection device (11) of the main source (10) is powered by the voltage delivered by said main source (10) via a zener diode (12) connected to the terminals of said main source (10) via a series resistance.

7. A power supply according to claim 1, characterized in that the current limiting device (21) of the auxiliary source (20) includes a ballast circuit (23) of variable impedance and a current measuring resistance (24) connected in series in the current path of the auxiliary source (20), together with control means (25, 26) for controlling the ballast circuit (23) as a function of the voltage appearing across the terminals of the current measuring resistance (24).

8. A power supply according to claim 7, characterized in that said ballast circuit (23) is a transistor which is on/off switched, and in that said control means for controlling the ballast circuit (23) include a monostable circuit (25) tripped by a threshold comparator (26) which is sensitive to the voltage developed across the terminals of the current measuring resistance (24).

9. A power supply according to claim 1, characterized in that the current limiting device (21) of the auxiliary source (20) is powered by the voltage developed across the terminals of the auxiliary source (20) and switches to the high impedance state when unpowered.

**Patentansprüche**

1. Ausfallgestützte elektrische Gleichstromversorgung mit einer Signalisation des Ausfallzustands durch Polarisationsumkehr, mit einer Hauptversorgungsquelle, welche bei normalen Betriebsbedingungen elektrische Gleichstromenergie liefert, und einer Hilfsversorgungsquelle, deren Leistung geringer als die der Hauptquelle ist und diese bei deren Ausfall ersetzt, aber die Versorgungspolarität umkehrt, um den Ausfallzustand zu signalisieren und die Verringerung der Belastung auf ein unerläßliches Mindestmaß zu ermöglichen, indem bestimmte Elemente, die bei Ausfall der Quelle nicht gespeist werden sollen, über eine während der Polaritätsumkehr gesperrte Diode angeschlossen werden, während die übrigen Elemente, die in jedem Fall gespeist werden sollen, über eine die Polaritätsumkehrungen ignorierende Diodenbrücke versorgt werden, dadurch gekennzeichnet, daß sie eine Hauptversorgungsquelle (10) für elektrische Gleichstromenergie mit einer Schutzeinrichtung (11), die bei an ihren Klemmen fehlender Spannung ihren Ausgang hochohmig werden läßt, und eine Hilfsversorgungsquelle (20) für elektrische Gleichstromenergie aufweist, die antiparallel zur Hauptquelle (10) geschaltet und mit einer Strombegrenzungseinrichtung (21) versehen ist, die im Normalbetrieb durch den Zusatzstrom ausgelöst wird, den ihr die Hauptquelle (10) aufzuprägen versucht, wobei der von der Hauptquelle gelieferte Strom deutlich größer als der von der Strombegrenzungseinrichtung bestimmte Strom ist.

2. Versorgungssystem nach Anspruch 1, dadurch gekennzeichnet, daß die Schutzeinrichtung (11) der Hauptquelle (10) ebenfalls mit Strombegrenzungsmitteln (14, 15, 16) versehen ist.

3. Versorgungssystem nach Anspruch 1, dadurch gekennzeichnet, daß die Strombegrenzungseinrichtung (21) der Hilfsquelle (20) mit Mitteln (25) versehen ist, die den Ausgang der Hilfsquelle (20) bei fehlender Spannung an ihren Klemmen hochohmig werden lassen.

4. Versorgungssystem nach Anspruch 1, dadurch gekennzeichnet, daß die Hauptquelle (10) und die Hilfsquelle (20) jeweils mit einer die Stromumkehr verhindernden Diode (17, 27) versehen sind, die eine Richtungsumkehr ihres Stroms verhindern.

5. Versorgungssystem nach Anspruch 1, dadurch gekennzeichnet, daß die Schutzeinrichtung (11) der Hauptquelle (10), von denen erstere in Reihe mit letzterer geschaltet ist, durch die Spannung gespeist wird, die sich zwischen den beiden Klemmen der Hauptquelle entwickelt, und daß sie bei fehlender Speisung hochohmig wird.

6. Versorgungssystem nach Anspruch 5, dadurch gekennzeichnet, daß die Schutzeinrichtung (11) der Hauptquelle (10) durch die Spannung versorgt wird, die von der Hauptquelle (10) über eine Zenerdiode (12) entwickelt wird, welche in Reihe mit einem Widerstand an den Klemmen der Hauptquelle (10) liegt.

7. Versorgungssystem nach Anspruch 1, dadurch gekennzeichnet, daß die Strombegrenzungseinrichtung (21) der Hilfsquelle (20) eine Ballastschaltung (23) variabler Impedanz und einen Strommeßwiderstand (24), der in Reihe im Strompfad der Hilfsquelle (20) angeordnet ist, sowie Mittel (25, 26) zur Steuerung der Ballastschaltung (23) in Abhängigkeit von der an den Klemmen des Strommeßwiderstands (24) anliegenden Spannung aufweist.

8. Versorgungssystem nach Anspruch 7, dadurch gekennzeichnet, daß die Ballastschaltung (23) ein als Schalttransistor betriebener Transistor ist und daß die Steuermittel der Ballastschaltung (23) eine monostabile Schaltung (25) umfassen, die von einem Schwellenwertkomparator (26) ausgelöst wird, der auf die an den Klemmen des Strommeßwiderstands (24) anliegende Spannung anspricht.

9. Versorgungssystem nach Anspruch 1, dadurch gekennzeichnet, daß die Strombegrenzungseinrichtung (21) der Hilfsquelle (20) mit der an den Klemmen der Hilfsquelle (20) entwickelten Spannung gespeist wird und bei fehlender Speisung hochohmig wird.

# FIG.1

# FIG.2

FIG.3